# EUROPEAN PATENT APPLICATION

(11) **EP 4 440 084 A1**
(43) Date of publication of application: **02.10.2024**
(21) Application number: 22897352.5
(22) Date of filing: 23.09.2022
(51) Int. Cl.: H04L 69/06, H04L 69/22

(54) **TRANSMISSION PROCESSING METHOD AND SYSTEM FOR MULTIPLEXED MESSAGES ON AUTOMOBILE BUS**

(30) Priority: 26.11.2021 CN 202111421473
(71) Applicant: Guangzhou Automobile Group Co. Ltd., Guangzhou, Guangdong 510030 (CN)
(72) Inventor: LI, Guanjia, Guangzhou, Guangdong 511434 (CN); ZHANG, Yanying, Guangzhou, Guangdong 511434 (CN); CHENG, Yanjie, Guangzhou, Guangdong 511434 (CN); HE, Lieyan, Guangzhou, Guangdong 511434 (CN); HUANG, Guangjian, Guangzhou, Guangdong 511434 (CN); SUN, Xiaoyu, Guangzhou, Guangdong 511434 (CN)
(74) Representative: Zaboliene, Reda
(86) International application number: PCT/CN2022/121085
(87) International publication number: WO 2023/093266

(57) **Abstract**

The present application provides a method for transmitting and processing multiplexing messages through an automobile bus. The method includes: step S10, a sending end node encapsulating data according to a predetermined message encapsulation format, and forming multiple encapsulated multiplexing messages, and periodically sending the multiplexing messages sequentially through an automobile bus; step S11 a receiving end node filtering the multiplexing message; step S12, the receiving end node verify the filtered multiplexing message; step S13, the receiving end node analyzing the verified multiplexing message, and obtaining encapsulated data content of the verified multiplexing message. The present application also discloses a corresponding system. By implementing the application, a transmission efficiency between the sending node and the receiving node can be improved, a transmission delay of the multiplexing message can be reduced, and an effective load and a utilization rate of the message can be increased.

## Description

This application claims priority to Chinese Patent Application No. 202111421473.5 filed on November 26, 2021, and a title of the application is "method, and system for transmitting and processing multiplexing messages through an automobile bus", the contents of which are incorporated by reference herein.

### FIELD

The present disclosure relates to a technical field of bus communication, especially relates to a method, a system for transmitting and processing multiplexing messages through an automobile bus.

### BACKGROUND

With automotive electrical functions increasing, a number of electrical controllers also increases, and a number of signals interacting between the electrical controllers increases. At present, Controller Area Network (CAN) bus is often used in automobiles to realize communication between the electrical controllers, and a large-capacity data transmission can be realized on the CAN bus of an automobile. Specifically, it can be realized by the multi-packet data transmission method defined in a data link layer according to the SAE J1939 protocol.

However, there are some shortcomings in above existing method: when transmitting multi-packet data, it is necessary to manage a connection establishment, a data transmission process, and a connection closedown between a sending node and a receiving node. These additional message transmissions reduce an effective message transmission load. At the same time, operating resources of the sending end node and the receiving end node are also increased. In addition, the SAE J1939 protocol stipulates that a maximum message communication rate is 250Kbps, which is much smaller than a commonly used rate of the CAN bus (such as 500Kbps or 2Mbps), thus having a low utilization rate.

### SUMMARY

A technical problem to be solved in the application is to provide a method, a system for transmitting and processing multiplexing messages through an automobile bus, which can improve a transmission efficiency between a sending end node and a receiving end node, and reduce a transmission delay of the multiplexing messages, increase a payload and utilization rate of the multiplexing messages.

In order to solve the above technical problem, as an aspect of the present application, a method for transmitting and processing multiplexing messages through an automobile bus is provided, the method includes:
step S10, encapsulating data to be sent according to a predetermined message encapsulation format and forming a plurality of encapsulated multiplexing messages, by a sending end node; and periodically sending the multiplexing messages sequentially through an automobile bus, by the sending end node;
step S11, filtering the multiplexing message and reserving the multiplexing message registered at the receiving end node, by a receiving end node, after monitoring one multiplexing message through the automobile bus;
step S12, performing a message verification processing on the reserved multiplexing message combined with a sending cycle and other received multiplexing message information, by the receiving end node, according to field content in a message encapsulation format of a reserved multiplexing message;
step S13, analyzing a verified multiplexing message, and obtaining encapsulated data content of the verified multiplexing message, by the receiving end node.

Wherein the step S10 includes:
step S 100, obtaining data content of the data to be sent;
step S101, selecting at least part of the data content of the data, and encapsulating the at least part of the data content according to field content that includes a message identifier, a sending cycle, a message length, a maximum of sending round serial number, a current sending round serial number, and a transmission content, wherein the transmission content includes at least one content block, each content block including data content, a data length, and coordinates; and each of the coordinates including two subitems, one of the two subitems representing a sending round serial number of transmitted data content in the multiplexing message, and the other representing a start bit of the transmitted data content in the multiplexing message;
step S102, filling the encapsulated data content into the multiplexing message;
step S103, sending the multiple multiplexing messages sequentially through the automobile bus, in a current sending cycle, and sending the multiple multiplexing messages continuously and repeatedly in sequence in subsequent sending cycles, according to a sequence of the sending round serial number in the multiplexing message.

Wherein the step S11 includes:
determining a type of the multiplexing message according to the message identifier in the multiplexing message, by the receiving end node; and reserving the multiplex message by the receiving end node, in response that the multiplexing message carries a registered multiplex message identifier, after monitoring each of the multiplexing message through the automobile bus; discarding the multiplex message by the receiving end node, in response that the multiplexing message does not carry the registered multiplex message identifier.

Wherein the step S12 includes:
performing a sending cycle verification, a message length verification, a sending round serial number correctness verification and a sending round serial number continuity verification on the reserved multiplexing message; and
in response that all verifications are passed, determining that the multiplexing message is the verified multiplexing message; in response that all verifications are not passed, recording a corresponding verification error code for the multiplexing message.

Wherein, the sending cycle verification include: calculating a time difference between the multiplexing message and a last received multiplexing message, determining whether a deviation between the time difference and a sending cycle is within a predetermined threshold range;
the message length verification includes: reading an actual message length of the multiplexing message, and determining whether the actual message length is the same as the message length recorded in the multiplexing message;
the sending round serial number correctness verification includes: determining whether a current sending round serial number in the multiplexing message is greater than or equal to 0, and less than or equal to a maximum of the sending round serial number;
the sending round serial number continuity verification includes: determining the current sending round serial number in the multiplexing message, and comparing the current sending round serial number with the sending round serial number of the multiplexing message received in the previous round, and determining whether there is continuity.

Correspondingly, as another aspect of the present application, a system for transmitting and processing multiplexing messages through an automobile bus is provided, the system includes at least a sending end node and a receiving end node communicating with the sending end node by automobile bus, wherein:
the sending end node is configured to encapsulate data to be sent according to a predetermined message encapsulation format, and to form a plurality of encapsulated multiplexing messages, and periodically sending the multiplexing messages sequentially through the automobile bus;
the receiving end node is configured to filter, when monitoring a multiplexing message through the automobile bus, the multiplexing message, and reserve the multiplexing message registered at the receiving end node, and perform a message verification processing on the reserved multiplexing message according to a field content in a message encapsulation format of the reserved multiplexing message, combined with a sending cycle and other received multiplexing message information, and analyze a verified multiplexing message and obtain encapsulated data content of the verified multiplexing message.

Wherein the sending end node further includes:
an acquisition unit, configured to obtain data content of the data to be sent;
an encapsulation unit, configured to select at least part of the data content of the data, and encapsulate the at least part of the data content according to field content that include a message identifier, a sending cycle, a message length, a maximum of sending round serial number, a current sending round serial number, and a transmission content, wherein, the transmission content includes at least one content block, each content block includes a data content, a data length, and coordinates; and each of the coordinate includes two subitems, one of the two subitems represents a sending round serial number of transmitted data content in the multiplexing message, and the other represents a start bit of the transmitted data content in the multiplexing message;
a multiplexing message filling unit, configured to fill the encapsulated data content into the multiplexing message;
a sending unit, configured to send the multiple multiplexing messages sequentially through the automobile bus, in a current sending cycle, and send the multiple multiplexing messages continuously and repeatedly in sequence in subsequent sending cycles, according to a sequence of the sending round serial number in the multiplexing message.

Wherein the receiving end node further includes:
a monitoring unit, configured to monitor whether there is a multiplexing message through the automobile bus;
a filtration processing unit, configured to determine a type of the multiplexing message according to the message identifier in the multiplexing message, in response that monitoring the multiplexing message through the automobile bus; and reserve, the multiplex message in response that determining that the multiplexing message carries the registered multiplex message identifier; discard the multiplex message in response that the multiplexing message does not carry the registered multiplex message identifier;
a verification processing unit, configured to perform a sending cycle verification, a message length verification, a sending round serial number correctness verification and a sending round serial number continuity verification on the reserved multiplexing message, and determine that the multiplexing message is a verified multiplexing message, in response that all the verifications are passed; record a corresponding verification error code for the multiplexing message in response that all verifications are not passed;
an analysis processing unit, configured to analyze the verified multiplexing message, obtain encapsulated data content, and combine the encapsulated data content according to a sequence of the sending round serial number.

Wherein, the sending cycle verification includes: calculating a time difference between the multiplexing message and last received multiplexing message, determining whether a deviation between the time difference and a sending cycle is within a predetermined threshold range;
the message length verification includes: reading an actual message length of the multiplexing message, and determining whether the actual message length is the same as the message length recorded in the multiplexing message;
the sending round serial number correctness verification includes: determining whether current sending round serial number in the multiplexing message is greater than or equal to 0, and less than or equal to a maximum of the sending round serial number;
the sending round serial number continuity verification includes: determining the current sending round serial number in the multiplexing message, and comparing the current sending round serial number with the sending round serial number of the multiplexing message received in the previous round, and determining whether there is continuity.

Implementing the embodiments of the present application have the following beneficial effects.

The present application provides a method for transmitting and processing multiplexing messages through an automobile bus and a system, by encapsulating the data to be sent in a predetermined encapsulation format at the receiving end node, a multiplexing message is formed the message identifier, the sending cycle, the message length, the maximum of the sending round serial number, the current sending round serial number, etc. are recorded in the multiplexing message, and the multiplexing message is send repeatedly and continuously; after receiving the multiplexing message, the receiving end node can perform filtering, verification, and analyzing according to content of the multiplexing message to obtain the required data content. The method adopted in the present application need not to establish a connection between the sending end node and the receiving end node in advance, therefore improving a transmission efficiency between the sending end node and the receiving end node.

In the present application, the transmission processing by using the multiplexing message is used to reduce a message transmission delay, reduce operating resources of the sending end nodes and the receiving end nodes, and improve the effective utilization rate of the message.

### BRIEF DESCRIPTION OF THE DRAWINGS

In order to more clearly illustrate technical solutions in the embodiments of the present application or the prior art, the following part will briefly introduce accompanying drawings that need to be used in the description of the embodiments or the prior art. Obviously, the accompanying drawings in the following description are only some embodiments of the present application. For those of ordinary skill in the art, on a premise of not paying creative labor, obtaining other drawings according to the accompanying drawings still belongs to a category of the present application.
FIG. 1 is a schematic diagram of a main flowchart of one embodiment of a method for transmitting and processing multiplexing messages through an automobile bus provided by the present application.
FIG. 2 is a schematic structural diagram of a predetermined message encapsulation format involved in the present application.
FIG. 3 is a more detailed flowchart of the receiving end node involved in the present application.
FIG. 4 is a schematic structural diagram of an embodiment of a system for transmitting and processing multiplexing messages through an automobile bus provided by the present application.

### DETAILED DESCRIPTION

In order to make purposes, technical solutions and advantages of the present application clearer, the present application will be further described in detail below in conjunction with the accompanying drawings.

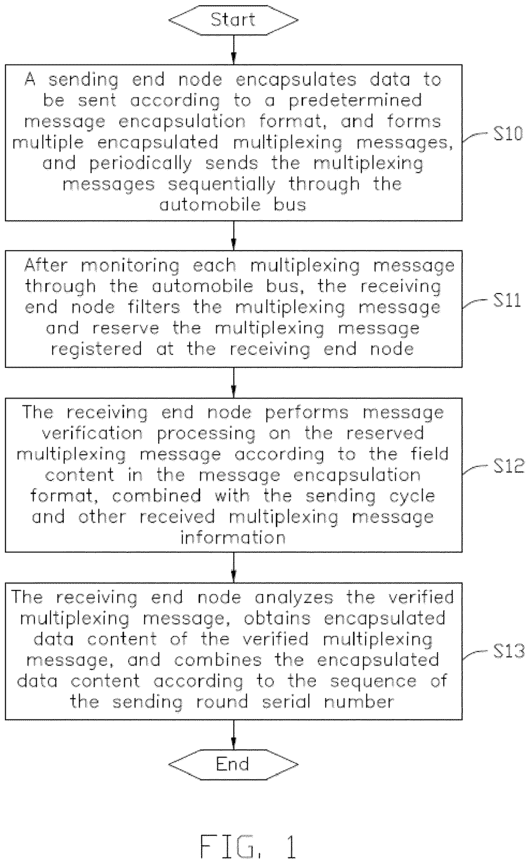

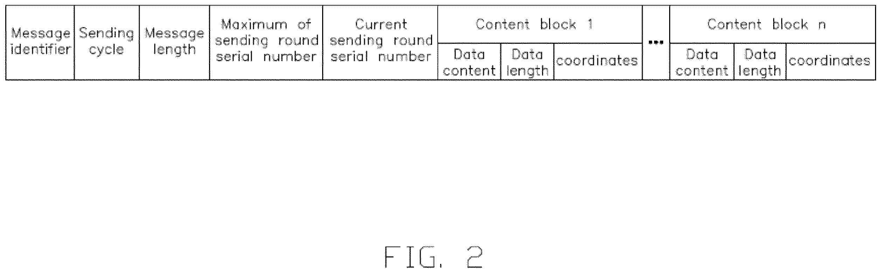

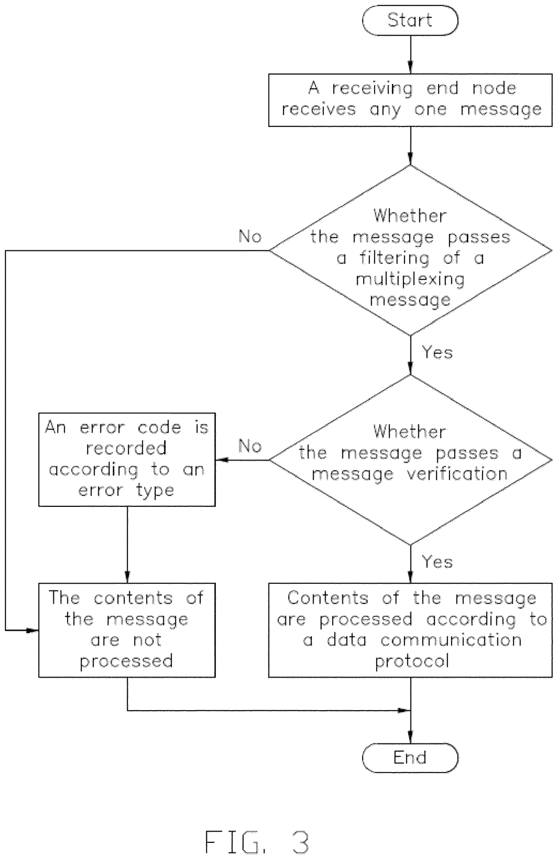

FIG. 1 illustrates a schematic diagram of a main flowchart of one embodiment of a method for transmitting and processing multiplexing messages through an automobile bus provided by the present application, combined with FIG. 2 and FIG. 3, in one embodiment, the method includes following steps.

Step S10, a sending end node encapsulates data to be sent according to a predetermined message encapsulation format, and forms multiple encapsulated multiplexing messages, and periodically sends the multiplexing messages sequentially through the automobile bus. The automobile bus can be an automotive bus such as Controller Area Network (CAN) bus.

In an embodiment, the step S10 includes following steps.
step S 100, data content of the data to be sent, is obtained and collected.
step S101, at least part of the data content of the data is selected, and encapsulated according to following field content: a message identifier, a sending cycle, a message length, a maximum of sending round serial number, a current sending round serial number, and a transmission content, wherein, the transmission content includes at least one content block (for example, it may be multiple independent contents), each content block includes: a data content, a data length, and coordinates, and each coordinate includes two subitems, one of which represents a sending round serial number of the transmitted data content in the multiplexing message, and the other represents a start bit of the transmitted data content in the multiplexing message. In one example, the coordinate can be expressed in a form such as (X, Y), a X coordinate represents the sending round serial number of the transmitted content in the multiplexing message, and a Y coordinate represents the start bit of the transmitted content in the multiplexing message.

The predetermined message encapsulation format involved in above step can be shown in FIG. 2.

Step S 102, the encapsulated data content is filled into the multiplexing message.

Step S103, in current sending cycle, according to a sequence of the sending round serial number in the multiplexing message, the multiple multiplexing messages are sent sequentially through the automobile bus, and the multiple multiplexing messages are continuously and repeatedly sent in sequence in subsequent sending cycles.

Specifically, the multiplexing message sent by the sending end node starts from the multiplexing message with the sending round serial number 0, and then sends the multiplexing message corresponding to the sending round serial number, according to a sequence from small to large. After sending the multiplexing message with the maximum of the sending round serial number, the next round of the multiplexing message sent by the sending end node, will start from the multiplexing message with the sending round sequence number 0, and then continue to send the multiplexing messages corresponding to the sending round serial number, according to the sequence from small to large, and so on.

Step S11, after monitoring each multiplexing message through the automobile bus, the receiving end node filters the multiplexing message and reserve the multiplexing message registered at the receiving end node.

In an embodiment, the step S11 includes: after the receiving end node monitors each multiplexing message through the automobile bus, a type of the multiplexing message is determined according to the message identifier in the multiplexing message, and when determining that the multiplexing message carries the registered multiplex message identifier, then the multiplex message is reserved; otherwise, the multiplex message is discarded.

In one embodiment of the present application, the multiplexing messages can be divided into four categories: 1. messages with unregistered protocol; 2. non- multiplexing messages with registered protocol; 3. multiplexing messages with registered protocol; 4. messages in other situations. For the third type, the determining result is that the multiplexing message is a registered multiplexing message. For the first, second, and fourth types, the determining result is that the multiplexing message is a non-registered multiplex message.

Step S12, the receiving end node performs message verification processing on the reserved multiplexing message according to the field content in the message encapsulation format, combined with the sending cycle and other received multiplexing message information.

In an embodiment, the step S12 includes: performing a sending cycle verification, a message length verification, a sending round serial number correctness verification and a sending round serial number continuity verification on the reserved multiplexing message, and when all the verifications are passed, it is determined that the multiplexing message is a verified multiplexing message, otherwise, when not all the verifications are passed, it is determined that a verification of the multiplexing message fails, and a corresponding verification error code is recorded for the multiplexing message.

Wherein, contents of the sending cycle verification include: calculating a time difference between the multiplexing message and the last received multiplexing message, determining whether a deviation between the time difference and the sending cycle is within a predetermined threshold range. In one example, the time difference between the multiplexing message and the last received multiplexing message with the same identifier can be calculated. If the time difference is greater than or equal to a multiplying result of the sending cycle and (1-20%), and the time difference is less than or equal to a multiplying result of the sending period and (1+20%), the verification is passed. If the time difference is greater than a multiplying result of the sending cycle and (1+20%), or the time difference is smaller than a multiplying result of the sending cycle and (1-20%), the verification fails, and the receiving node records the error code that the cycle of the multiplexing message is incorrect. It can be understood that the above 20% is only an example, and other values are also applicable to the present method.

Contents of the message length verification include: reading an actual message length of the multiplexing message, and determining whether the actual message length is the same as the message length recorded in the multiplexing message; if the actual message length is equal to the message length in the protocol, the verification is passed; if the actual message length is not equal to the message length in the protocol, the verification fails, and the receiving end node records an error code indicating that the length of the multiplexing message is incorrect.

Contents of the sending round serial number correctness verification include: determining whether the current sending round serial number in the multiplexing message is greater than or equal to 0, and less than or equal to the maximum of the sending round serial number; if the current sending round serial number is greater than or equal to 0, and less than or equal to the maximum of the sending round serial number, the verification is passed; if the current sending round number is greater than the maximum of the sending round serial number in the protocol, the verification fails, and the receiving node records an error code that the current sending round serial number of the multiplexing message is incorrect.

Contents of the sending round serial number continuity verification include: determining the current sending round serial number in the multiplexing message, and comparing it with the sending round serial number of the multiplexing message received in the previous round, and determining whether there is continuity between the current sending round serial number and the sending round serial number of the multiplexing message received in the previous round. Specifically, after receiving the multiplexing message, the receiving end node reads the current sending round serial number and compares it with the sending round serial number of the multiplexing message received in the previous round. If the current sending round serial number is 0, and the sending round serial number of the multiplexing message received in the previous round is the maximum of the sending round serial number, the verification is passed; if the current sending round serial number is not 0 and is 1 greater than the sending round serial number of the multiplexing message received in the previous round, the verification is passed; if the current sending round serial number is 0 and the sending round serial number of the multiplexing message received in the previous round is not the maximum, the verification fails; if the current sending round sequence number is not 0 and is not 1 greater than the sending round serial number of the multiplexing message received in the previous round, the verification fails; the receiving end node records the error code of the discontinuous the sending round serial number of the multiplexing message.

Step S13, the receiving end node analyzes the verified multiplexing message, obtains encapsulated data content of the verified multiplexing message, and combines the encapsulated data content according to the sequence of the sending round serial number.

More detailed process details of the above step S11 to step S13 can be referred to as shown in FIG. 3.

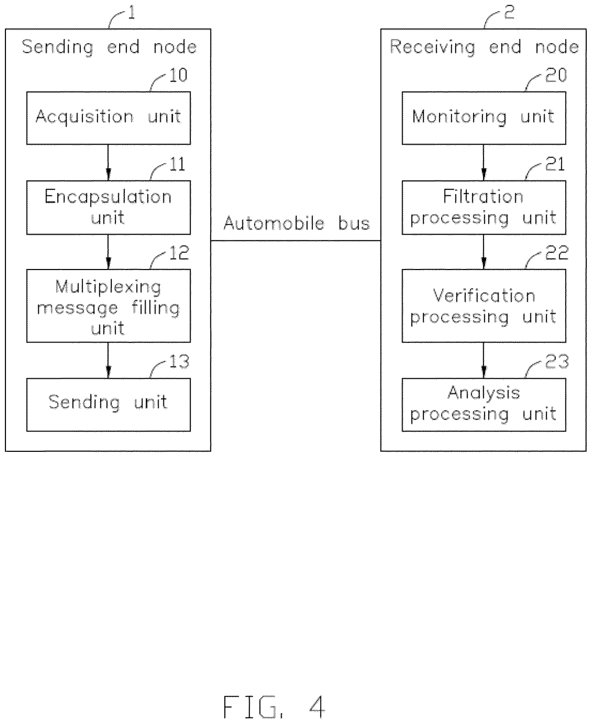

As shown in FIG. 4, a schematic structural diagram of an embodiment of a system for transmitting and processing multiplexing messages through an automobile bus provided by the present application is illustrated. In one embodiment, the system for transmitting and processing multiplexing messages through an automobile bus, at least includes a sending end node 1 and a receiving end node 2 communicating by the automobile bus.

The sending end node 1 encapsulates data to be sent according to a predetermined message encapsulation format, and form multiple encapsulated multiplexing messages, and periodically sends the multiplexing messages sequentially through the automobile bus.

The receiving end node 2, when monitoring each multiplexing message through the automobile bus, filters the multiplexing message and reserve the multiplexing message registered at the receiving end node, performs message verification processing on the reserved multiplexing message according to the field content in the message encapsulation format, combined with the sending cycle and other received multiplexing message information; and analyzes the verified multiplexing message, obtains the encapsulated data content.

More specifically, the sending end node 1 further includes:
an acquisition unit 10, configured to obtain data content of the data to be sent;
an encapsulation unit 11, configured to select at least part of the data content of the data, and encapsulated according to following field content: a message identifier, a sending cycle, a message length, a maximum of sending round serial number, a current sending round serial number, and a transmission content, wherein, the transmission content includes at least one content block, each content block includes: a data content, a data length, and coordinates, and each coordinate includes two subitems, one of which represents a sending round serial number of the transmitted data content in the multiplexing message, and the other represents a start bit of the transmitted data content in the multiplexing message;
a multiplexing message filling unit 12, configured to fill at least one encapsulated data content into the multiplexing message;
a sending unit 13, configured to send, in current sending cycle, according to a sequence of the sending round serial number in the multiplexing message, the multiple multiplexing messages sequentially through the automobile bus, and send the multiple multiplexing messages continuously and repeatedly in sequence in subsequent sending cycles.

More specifically, the receiving end node 2 includes:
a monitoring unit 20, configured to monitor whether there is multiplexing message through the automobile bus;
a filtration processing unit 21, configured to determine, after the receiving end node monitors each multiplexing message through the automobile bus, a type of the multiplexing message according to the message identifier in the multiplexing message, and reserve, when determining that the multiplexing message carries the registered multiplex message identifier, the multiplex message; otherwise, discard the multiplex message;
a verification processing unit 22, configured to perform a sending cycle verification, a message length verification, a sending round serial number correctness verification and a sending round serial number continuity verification on the reserved multiplexing message, and determine, when all the verifications are passed, that the multiplexing message is a verified multiplexing message; otherwise record a corresponding verification error code for the multiplexing message;
an analysis processing unit 23, configured to analyze the verified multiplexing message, obtain encapsulated data content, and combine the encapsulated data content according to the sequence of the sending round serial number.

Wherein, in the verification processing unit 22, contents of the sending cycle verification include: calculating a time difference between the multiplexing message and the last received multiplexing message, determining whether a deviation between the time difference and the sending cycle is within a predetermined threshold range.

Contents of the message length verification include: reading an actual message length of the multiplexing message, and determining whether the actual message length is the same as the message length recorded in the multiplexing message.

Contents of the sending round serial number correctness verification include: determining whether the current sending round serial number in the multiplexing message is greater than or equal to 0, and less than or equal to the maximum of the sending round serial number.

Contents of the sending round serial number continuity verification include: determining the current sending round serial number in the multiplexing message, and comparing it with the sending round serial number of the multiplexing message received in the previous round, and determining whether there is continuity.

More details can be referred to and combined with the description of FIG. 1 to FIG. 3, and will not be repeated here.

Implementing the embodiments of the present application have the following beneficial effects.

The present application provides a method for transmitting and processing multiplexing messages through an automobile bus and a system, by encapsulating the data to be sent in a predetermined encapsulation format at the receiving end node, a multiplexing message is formed the message identifier, the sending cycle, the message length, the maximum of the sending round serial number, the current sending round serial number, etc. are recorded in the multiplexing message, and the multiplexing message is send repeatedly and continuously; after receiving the multiplexing message, the receiving end node can perform filtering, verification, and analyzing according to content of the multiplexing message to obtain the required data content. The method adopted in the present application need not to establish a connection between the sending end node and the receiving end node in advance, therefore improving a transmission efficiency between the sending end node and the receiving end node.

In the present application, the transmission processing by using the multiplexing message is used to reduce a message transmission delay, reduce operating resources of the sending end nodes and the receiving end nodes, and improve the effective utilization rate of the message.

Those skilled in the art should understand that the embodiments of the present application may be provided as methods, apparatuses, or computer program products. Accordingly, the present application may take the form of an entirely hardware embodiment, an entirely software embodiment, or an embodiment combining software and hardware aspects. Furthermore, the present application may take the form of a computer program product embodied on one or more computer-usable storage media (including but not limited to disk storage, CD-ROM, optical storage, etc.) having computer-usable program code embodied therein.

The present application is described with reference to flowcharts and/or block diagrams of methods, devices (systems), and computer program products according to embodiments of the present application. It should be understood that each process and/or block in the flowchart and/or block diagram, and a combination of processes and/or blocks in the flowchart and/or block diagram can be realized by computer program instructions. These computer program instructions may be provided to a general purpose computer, a special purpose computer, an embedded processor, or a processor of other programmable data processing equipment to produce a machine, thus the instructions executed by the processor of the computer or other programmable data processing equipment, generate means for realizing the functions specified in one or more processes of the flowchart and/or one or more blocks of the block diagram.

What is disclosed above is only a preferred embodiment of the application, and it cannot limit the scope of rights of the application. Therefore, the equivalent changes made according to the claims of the application still belong to the scope covered by the application.

## Claims

1. A method for transmitting and processing multiplexing messages through an automobile bus, **characterized in that**, the method comprises:
step S10, encapsulating data to be sent according to a predetermined message encapsulation format and forming a plurality of encapsulated multiplexing messages, by a sending end node; and periodically sending the multiplexing messages sequentially through an automobile bus, by the sending end node;
step S11, filtering the multiplexing message and reserving the multiplexing message registered at the receiving end node, by a receiving end node, after monitoring one multiplexing message through the automobile bus;
step S12, performing a message verification processing on the reserved multiplexing message combined with a sending cycle and other received multiplexing message information, by the receiving end node, according to field content in a message encapsulation format of a reserved multiplexing message;
step S13, analyzing a verified multiplexing message, and obtaining encapsulated data content of the verified multiplexing message, by the receiving end node.

2. The method for transmitting and processing multiplexing messages through an automobile bus according to claim 1, **characterized in that** the step S10 comprises:
step S100, obtaining data content of the data to be sent;
step S101, selecting at least part of the data content of the data, and encapsulating the at least part of the data content according to field content that comprises a message identifier, a sending cycle, a message length, a maximum of sending round serial number, a current sending round serial number, and a transmission content, wherein the transmission content comprises at least one content block, each content block comprising data content, a data length, and coordinates; and each of the coordinates comprising two subitems, one of the two subitems representing a sending round serial number of transmitted data content in the multiplexing message, and the other representing a start bit of the transmitted data content in the multiplexing message;
step S102, filling the encapsulated data content into the multiplexing message;
step S 103, sending the multiple multiplexing messages sequentially through the automobile bus, in a current sending cycle, and sending the multiple multiplexing messages continuously and repeatedly in sequence in subsequent sending cycles, according to a sequence of the sending round serial number in the multiplexing message.

3. The method for transmitting and processing multiplexing messages through an automobile bus according to claim 2, **characterized in that** the step S11 comprises:
determining a type of the multiplexing message according to the message identifier in the multiplexing message, by the receiving end node; and reserving the multiplex message by the receiving end node, in response that the multiplexing message carries a registered multiplex message identifier, after monitoring each of the multiplexing message through the automobile bus;
discarding the multiplex message by the receiving end node, in response that the multiplexing message does not carry the registered multiplex message identifier.

4. The method for transmitting and processing multiplexing messages through an automobile bus according to claim 2, **characterized in that** the step S12 comprises:
performing a sending cycle verification, a message length verification, a sending round serial number correctness verification and a sending round serial number continuity verification on the reserved multiplexing message; and
in response that all verifications are passed, determining that the multiplexing message is the verified multiplexing message; in response that all verifications are not passed, recording a corresponding verification error code for the multiplexing message.

5. The method for transmitting and processing multiplexing messages through an automobile bus according to claim 4, **characterized in that**:
the sending cycle verification comprises: calculating a time difference between the multiplexing message and a last received multiplexing message, and determining whether a deviation between the time difference and a sending cycle is within a predetermined threshold range;
the message length verification comprises: reading an actual message length of the multiplexing message, and determining whether the actual message length is the same as the message length recorded in the multiplexing message;
the sending round serial number correctness verification comprises: determining whether a current sending round serial number in the multiplexing message is greater than or equal to 0, and less than or equal to a maximum of the sending round serial number;
the sending round serial number continuity verification comprises: determining the current sending round serial number in the multiplexing message, and comparing the current sending round serial number with the sending round serial number of the multiplexing message received in the previous round, and determining whether there is continuity.

6. A system for transmitting and processing multiplexing messages through an automobile bus, comprising at least a sending end node and a receiving end node communicating with the sending end node by automobile bus, **characterized in that**,
the sending end node is configured to encapsulate data to be sent according to a predetermined message encapsulation format, to form a plurality of encapsulated multiplexing messages, and periodically sending the multiplexing messages sequentially through the automobile bus;
the receiving end node is configured to filter, when monitoring a multiplexing message through the automobile bus, the multiplexing message, and reserve the multiplexing message registered at the receiving end node, and perform a message verification processing on the reserved multiplexing message according to a field content in a message encapsulation format of the reserved multiplexing message, combined with a sending cycle and other received multiplexing message information, and analyze a verified multiplexing message and obtain encapsulated data content of the verified multiplexing message.

7. The system for transmitting and processing multiplexing messages through an automobile bus according to claim 6, **characterized in that** the sending end node further comprises:
an acquisition unit, configured to obtain data content of the data to be sent;
an encapsulation unit, configured to select at least part of the data content of the data, and encapsulate the at least part of the data content according to field content that comprise a message identifier, a sending cycle, a message length, a maximum of sending round serial number, a current sending round serial number, and a transmission content, wherein, the transmission content comprises at least one content block, each content block comprises a data content, a data length, and coordinates; and each of the coordinate comprises two subitems, one of the two subitems represents a sending round serial number of transmitted data content in the multiplexing message, and the other represents a start bit of the transmitted data content in the multiplexing message;
a multiplexing message filling unit, configured to fill the encapsulated data content into the multiplexing message;
a sending unit, configured to send the multiple multiplexing messages sequentially through the automobile bus, in a current sending cycle, and send the multiple multiplexing messages continuously and repeatedly in sequence in subsequent sending cycles, according to a sequence of the sending round serial number in the multiplexing message.

8. The system for transmitting and processing multiplexing messages through an automobile bus according to claim 7, **characterized in that** the receiving end node further comprises:
a monitoring unit, configured to monitor whether there is a multiplexing message through the automobile bus;
a filtration processing unit, configured to determine a type of the multiplexing message according to the message identifier in the multiplexing message, in response that monitoring the multiplexing message through the automobile bus; and reserve, the multiplex message in response that determining that the multiplexing message carries the registered multiplex message identifier; discard the multiplex message in response that the multiplexing message does not carry the registered multiplex message identifier;
a verification processing unit, configured to perform a sending cycle verification, a message length verification, a sending round serial number correctness verification and a sending round serial number continuity verification on the reserved multiplexing message, and determine that the multiplexing message is a verified multiplexing message, in response that all the verifications are passed; record a corresponding verification error code for the multiplexing message in response that all verifications are not passed;
an analysis processing unit, configured to analyze the verified multiplexing message, obtain encapsulated data content, and combine the encapsulated data content according to a sequence of the sending round serial number.

9. The system for transmitting and processing multiplexing messages through an automobile bus according to claim 8, **characterized in that**:
the sending cycle verification comprises: calculating a time difference between the multiplexing message and last received multiplexing message, determining whether a deviation between the time difference and a sending cycle is within a predetermined threshold range;
the message length verification comprises: reading an actual message length of the multiplexing message, and determining whether the actual message length is the same as the message length recorded in the multiplexing message;
the sending round serial number correctness verification comprises: determining whether current sending round serial number in the multiplexing message is greater than or equal to 0, and less than or equal to a maximum of the sending round serial number;
the sending round serial number continuity verification comprise: determining the current sending round serial number in the multiplexing message, and comparing the current sending round serial number with the sending round serial number of the multiplexing message received in the previous round, and determining whether there is continuity.
